(19) Europäisches Patentamt
European Patent Office
Office européen des brevets

(11) EP 0 850 957 B1

(12) **FASCICULE DE BREVET EUROPEEN**

(45) Date de publication et mention de la délivrance du brevet:
**10.04.2002 Bulletin 2002/15**

(51) Int Cl.[7]: **C08F 4/40**

(21) Numéro de dépôt: **97401443.3**

(22) Date de dépôt: **20.06.1997**

(54) **Procédé de polymérisation ou copolymérisation radicalaire contrôlée de monomères (méth)acryliques, vinyliques, vinylidéniques et diéniques et (co)polymères obtenus**

Verfahren zur kontrollierte radikalische polymerisation oder copolymerisation non (meth)acryl, vinyl, vinyliden und dien monomere und so hergestellte (co)polymere

Process for controlled radical polymerisation or copolymerisation of (meth)acryl, vinyl, vinylidene and dien monomers and so prepared (co)polymers

(84) Etats contractants désignés:
**BE CH DE ES FR GB IT LI NL SE**

(30) Priorité: **26.12.1996 FR 9616049**

(43) Date de publication de la demande:
**01.07.1998 Bulletin 1998/27**

(73) Titulaire: **Atofina**
**92800 Puteaux (FR)**

(72) Inventeurs:
- **Senninger, Thierry**
  **57700 Hayange (FR)**
- **Sanchez, Laurent**
  **64000 Pau (FR)**
- **Darcos, Vincent**
  **33210 St. Loubert (FR)**
- **Lastecoueres, Dominique**
  **33350 St. Radegonde (FR)**
- **Verlhac, Jean-Baptiste**
  **33400 Talence (FR)**
- **Matyjaszewski, Krzytof**
  **Pittsburgh, PA (US)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**US-A- 5 405 913**

- **J.S. WANG: "CONTROLLED/"LIVING" RADICAL POLYMERIZATION. HALOGEN ATOM TRANSFER RADICAL POLYMERIZATION PROMOTED BY A CU(I)/CU(II) REDOX PROCESS" MACROMOLECULES, vol. 28, no. 23, 6 novembre 1995, P3F106, pages 7901-7910, XP002033914**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 850 957 B1

Printed by Jouve, 75001 PARIS (FR)

## Description

La présente invention est relative à un procédé de polymérisation ou copolymérisation radicalaire contrôlée de monomères (méth)acryliques et/ou vinyliques (par exemple, vinylaromatiques) et/ou vinylidéniques et/ou diéniques, ainsi qu'aux polymères ou copolymères ainsi obtenus.

La polymérisation radicalaire constitue l'un des processus de polymérisation les plus exploités industriellement en raison de la variété des monomères polymérisables, de la facilité de mise en oeuvre et des procédés de synthèse employés (masse, émulsion, solution, suspension). Il est toutefois difficile en polymérisation radicalaire classique de contrôler la dimension des chaînes polymères ainsi que la distribution des masses moléculaires. Les matériaux constitués de ces macromolécules ne possèdent donc pas de propriétés physico-chimiques contrôlées. De plus, la polymérisation radicalaire classique ne permet pas de conduire à des copolymères séquences.

Les polymérisations ioniques ou coordinatives permettent, quant à elles, de contrôler le processus d'addition du monomère, mais elles nécessitent des conditions soignées de polymérisation, notamment une pureté marquée du monomère et des réactifs, ainsi qu'une atmosphère inerte.

L'objectif est de pouvoir réaliser des polymérisations radicalaires qui contrôlent mieux les divers paramètres énoncés ci-dessus et qui puissent conduire à des copolymères séquencés.

Le concept utilisé pour contrôler la polymérisation fait appel aux réactions d'oxydo-réduction par transfert d'atomes ou de groupes d'atomes de façon réversible. Le complexe métallique oscille entre deux états d'oxydation. Ce concept a été exploité par Sawamoto et par Matyjaszewski pour la polymérisation des monomères vinyliques.

Sawamoto (Macromolecules **1996**, 29(3), 1070 et Macromolecules **1995**, 28(5), 1721) a utilisé des complexes de ruthénium (II) associé à un halogénure d'alkyle, par exemple $RuCl_2(PPh_3)_3$. Un tel système nécessite l'ajout d'un acide de Lewis qui augmente la vitesse de la polymérisation par complexation de l'acide sur les fonctions carbonyle des chaînes en croissance.

Matyjaszewski (Macromolecules **1995,** 28(23), 7901) exploite le même concept avec des complexes de cuivre associés à des ligands bidentates de type bipyridine :

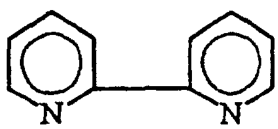

Pour ce faire, un sel de cuivre (I) tel que CuCl ou CuBr est mélangé au ligand azoté dans un rapport molaire Cu : ligand = 1:3.

Le ligand azoté a un grand rôle dans la polymérisation puisqu'il permet de moduler les propriétés stéréo-électroniques du métal et de solubiliser le sel de cuivre (I). Ainsi, il est nécessaire, pour réaliser la solubilisation complète du complexe de cuivre dans le monomère ou bien dans le mélange monomère/solvant de polymérisation, d'utiliser des bipyridines substituées en para de l'azote par des groupements lipophiles, telles que la dinonylbipyridine :

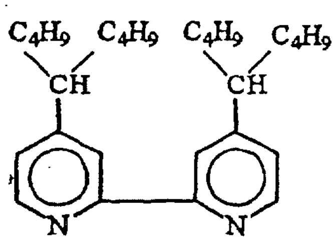

Cette solubilisation permet d'accroître les performances du système de polymérisation par un meilleur contact entre la chaîne en croissance "endormie", c'est-à-dire terminée par une fonction A telle que définie ci-dessous, et le complexe de coordination.

La présente invention a pour but de proposer un système d'amorçage utilisant, pour le catalyseur, une autre variété de ligands polydentates pouvant remplacer avantageusement la bipyridine ou les bipyridines substituées, et permettant d'obtenir des vitesses de polymérisation, donc des productivités, plus élevées que ne le font les bipyridines.

L'objectif de la présente invention est atteint par un procédé de polymérisation ou copolymérisation radicalaire contrôlée de monomères (méth)acryliques et/ou vinyliques, caractérisé par le fait que l'on polymérise ou copolymérise

en masse, solution, émulsion ou suspension à une température pouvant descendre jusqu'à 0°C, au moins un desdits monomères en présence d'un système d'amorçage comprenant :

- au moins un composé générateur de radicaux ; et
- au moins un catalyseur constitué par un complexe de métal représenté par la formule suivante (I) :

$$MA_a(L)_n \quad (I)$$

dans laquelle :

- M représente Cu, Ag ou Au ;
- A représente un halogène, un pseudo-halogène ou. un groupement carboxylate ;
- les L sont des ligands du métal M choisis indépendamment parmi ceux représentés par la formule (II) suivante :

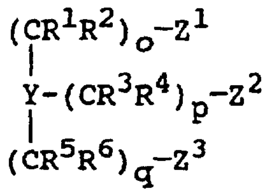

(II)

dans laquelle :

- Y représente N ou P ;
- $R^1$, $R^2$, $R^3$, $R^4$, $R^5$ et $R^6$ représentent chacun indépendamment un atome d'hydrogène, un groupe alkyle en $C_1$-$C_{10}$, un groupe aromatique ou un groupe hétéroaromatique :
- $Z^1$, $Z^2$ et $Z^3$ représentent chacun indépendamment l'un parmi :

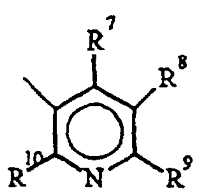 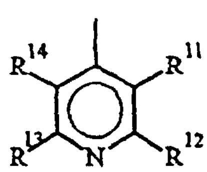 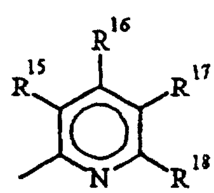 ;

$-NR^{19}R^{20}$
où :

- les radicaux $R^7$ à $R^{18}$ représentent chacun indépendamment un atome d'hydrogène, un groupe alkyle en $C_1$-$C_{10}$, un groupe aromatique ou un groupe hétéroaromatique ; et
- $R^{19}$ et $R^{20}$ représentent chacun indépendamment un atome d'hydrogène, un atome d'halogène, un radical alkyle en $C_1$-$C_{10}$, un radical alcoxy en $C_1$-$C_{10}$ ou un radical $-(CR^{21}R^{22})_rNR^{23}R^{24}$, où $R^{21}$, $R^{22}$, $R^{23}$ et $R^{24}$ représentent chacun indépendamment un atome d'hydrogène, un groupe alkyle en $C_1$-$C_{10}$, un groupe aromatique ou un groupe hétéroaromatique, et r est un entier de 1 à 10 ;

au plus deux parmi $Z^1$, $Z^2$ et $Z^3$ pouvant en outre représenter chacun un atome d'hydrogène;
- o, p et q représentent chacun indépendamment un entier de 1 à 10, et peuvent en outre représenter 0 sauf si le reste respectivement $Z^1$, $Z^2$ ou $Z^3$ associé représente $-NR^{19}R^{20}$ ;

- a vaut 1 ou 2 ;
- n vaut 1, 2 ou 3.

De préférence, M représente Cu.

A représente un halogène choisi notamment parmi Cl, Br, F et I, ou un pseudo-halogène choisi notamment

parmi CN, NCS, $NO_2$ et $N_3$, ou un groupement carboxylate tel qu'acétate.

A titre d'exemples de ligands L, on peut citer ceux de formule (IIa) :

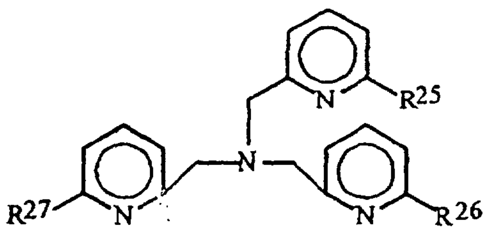

(IIa)

avec $R^{25} = R^{26} = R^{27} = H$
$R^{25} = H$ ; et $R^{26} = R^{27} = Me$
$R^{25} = R^{26} = R^{27} = Me$ ;

et les composés des formules :

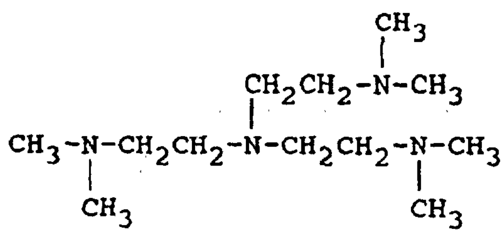

;

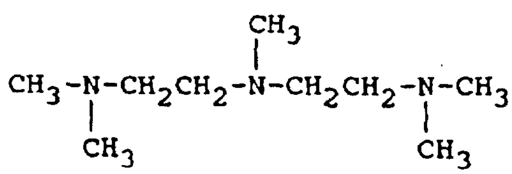

;

et

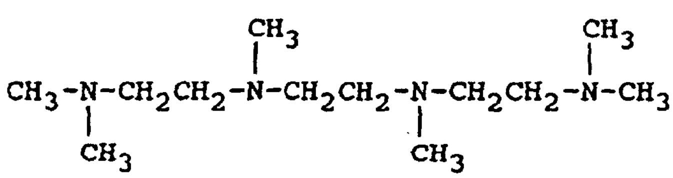

Le complexe de l'invention pourra être préparé et purifié *ex situ* avant d'être ajouté au milieu de polymérisation ou être formé directement dans le milieu de polymérisation au contact du monomère et du solvant de polymérisation. Dans ce dernier cas, il suffira de réunir en quantité voulue le sel du métal de transition M (Cu, Ag, Au) avec A et le ligand polydentate L. A titre d'exemples de sels de métaux de transition, on peut citer, de préférence, CuBr, CuCl ou encore l'acétate de cuivre (I) (CuOAc).

Le catalyseur ne jouant pas le rôle de générateur de radicaux, il est donc indispensable de lui associer un tel composé. La réaction entre le générateur de radicaux et l'espèce de métal M décrite ci-avant donne lieu à une polymérisation contrôlée. On pourra ainsi poursuivre une polymérisation en ajoutant une nouvelle dose d'un monomère, éventuellement différent du premier. Si ce monomère est différent du premier, et qu'il est ajouté après épuisement du premier (ou jusqu'à une conversion élevée de l'ordre de 80-100%, de préférence 95%), on obtiendra un copolymère séquencé. S'il est ajouté en même temps que le premier, la copolymérisation sera aléatoire et on obtiendra un copolymère statistique. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent particulièrement bien sont des composés halogénés activés par des effets électroniques donneurs et/ou récepteurs sur l'atome de carbone en position $\alpha$ du ou des halogènes dudit composé, notamment ceux indiqués ci-après :

Lorsque le générateur de radicaux est monofonctionnel, il peut être choisi dans les classes des composés suivants :

(a) les dérivés de formule :

$$CEZ_3$$

où :

- E = Cl, Br, I, F, H, $-CR^{28}R^{29}OH$, $R^{28}$ et $R^{29}$ représentant chacun indépendamment hydrogène ou alkyle en $C_1$-$C_{14}$ ; et
- Z = Cl ou Br,

par exemple, le tétrachlorure de carbone, le chloroforme, le tétrabromure de carbone, le 2,2,2-tribromoéthanol et le bromotrichlorométhane ;

(b) les dérivés de formule :

$$R^{30}CCl_3$$

où $R^{30}$ représente un groupe phéhyle ; benzyle ; benzoyle ; alcoxycarbonyle ; $R^{31}CO$ avec $R^{31}$ représentant alkyle en $C_1$-$C_{14}$ ou aryle ; alkyle ; mésityle ; trifluorométhyle ; ou nitro,
comme, par exemple, l'$\alpha$,$\alpha$,$\alpha$-trichlorotoluène, l'$\alpha$,$\alpha$,$\alpha$-trichloroacétophénone, le trichloroacétate d'éthyle, le 1,1,1-trichloroéthane, le 1,1,1-trichloro-2-phényléthane, le trichlorométhylmésitylène, le 1,1,1-trichloro-2,2,2-trifluoroéthane et le trichloronitrométhane ;

(c) les dérivés de formule :

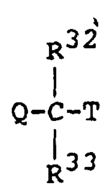

dans laquelle :

- Q représente un atome de chlore ou de brome ou un groupe acétate

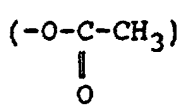

ou trifluoroacétate

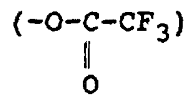

ou triflate ($O_3SCF_3$) ;

- $R^{32}$ représente un atome d'hydrogène, un groupe alkyle en $C_1$-$C_{14}$ ou un groupe aromatique, par exemple du type benzénique, anthracénique ou naphtalénique, ou un groupe $-CH_2OH$ $-CH_2OH$ ;
- T représente un groupe

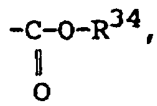

avec $R^{34}$ représentant chacun hydrogène ou un groupe alkyle ou aromatique; un groupe CN ; un groupe

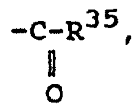

avec $R^{35}$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^{36}CO$, avec $R^{36}$ représentant alkyle en $C_1$-$C_{14}$ ou aryle ;

- $R^{33}$ représente un groupe entrant dans les définitions de $R^{32}$ ou de Q ou un groupe fonctionnel tel qu'hydroxyle, nitro, amino substitué ou non, alcoxy en $C_1$-$C_{14}$, acyle, acide carboxylique, ester ;

comme, par exemple, l'acide 2-bromopropionique, l'acide 2-bromobutanoïque, l'acide 2-bromohexanoïque, le 2-bromo-2-méthylpropionate d'éthyle, le bromoacétonitrile, le 2-bromopropionitrile, la 2-bromoisobutyrophénone et le chloroacétylisocyanate ; le 2-bromo-2-nitro-1,3-propanediol et le 2-bromo-2-nitropropane ;

(d) les composés lactones ou lactames halogénés en α, comme l'α-bromo-α-méthyl-γ-butyrolactone ou α-bromo-γ-valérolactone, le lauryllactame halogéné ou le caprolactame halogéné ;

(e) les N-halosuccinimides, comme le N-bromosuccinimide, et les N-halophtalimides, comme le N-bromophtalimide ;

(f) les halogénures (chlorures et bromures) d'alkylsulfonyle, le reste alkyle étant notamment en $C_1$-$C_{14}$, et les halogénures d'arène sulfonyle, tels que ceux de formule :

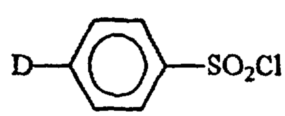

où D = Me, Cl, OMe, $NO_2$ ;

(g) les composés de formule :

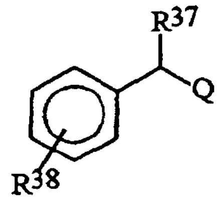

où :

- $R^{37}$ représente un atome d'hydrogène, un groupe alkyle en $C_1$-$C_{14}$ ou un groupe acide carboxylique, ester, nitrile ou cétone ;
- $R^{38}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ($SO_3^-Na^+$ ou $K^+$) ; et
- Q a la signification donnée précedemmrent ;

des exemples étant le (1-bromoéthyl)benzène et le (1-chloroéthyl)benzène ;

(h) les composés de formule :

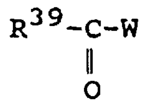

où :

- $R^{39}$ représente alkyle en $C_1$-$C_{14}$ ou aryle ; et
- W représente un halogène, préférentiellement Cl et Br, ou un pseudohalogène tel que $N_3$, SCN ;

(i) les composés de formule :

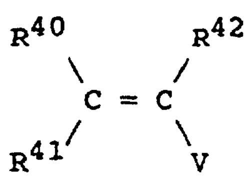

où :

- $R^{40}$, $R^{41}$ et $R^{42}$ représentent chacun indépendamment alkyle en $C_1$-$C_{14}$ ou aryle ; et
- V représente un halogène, tel que préférentiellement Cl, Br, ou également un groupement acétate, trifluoroacétate, triflate ;

et

(j) les halogénures aromatiques de formule :

Ar - U

où :

- Ar représente un groupement aromatique tel que $C_6H_5$- pouvant être substitué en position méta, ortho ou para par un groupement électroattracteur, tel que $NO_2$, $NO_3$, $SO_3$, ou électrodonneur, tel qu'un groupement alkyle

ou un groupement -ONa ; et

- U représente un halogène, tel que préférentiellement Cl ou Br.

On peut également envisager l'utilisation de générateurs de radicaux bifonctionnels et de fonctionnalité supérieure ; les générateurs de radicaux bifonctionnels peuvent être constitués de deux générateurs de radicaux monofonctionnels $A^1$ et $A^2$ issus des classes (c) à (j) précitées, reliés par une chaîne d'unités méthylène ou par un cycle benzénique ou par une combinaison des deux, tels que représentés par les formules :
$A^1-(CH_2)_s-A^2$ avec s entier de 1 à 14,

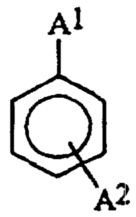

et

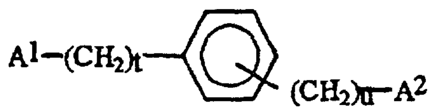

avec t et u représentant chacun indépendamment un entier de 1 à 14.

Dans le cas où $A^1$ et $A^2$ sont issus de la classe (c), on peut présenter les générateurs de radicaux bifonctionnels sous la formule :

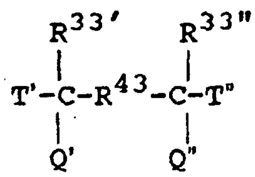

dans laquelle :

- T' et T" représentent chacun indépendamment un groupe entrant dans la définition de T ;
- Q' et Q" représentent chacun indépendamment un groupe entrant dans la défintion de Q ;
- $R^{33'}$ et $R^{33''}$ représentent chacun indépendamment un groupe entrant dans la définition de $R^{33}$ ; et
- $R^{43}$ représente un groupe $-(CH_2)_s-$,

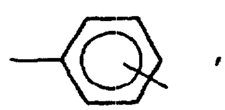

ou

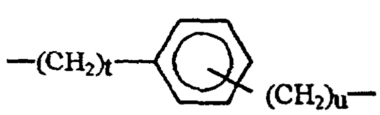

tels que définis ci-dessus.

On peut par exemple citer les amorceurs bifonctionnels des formules :

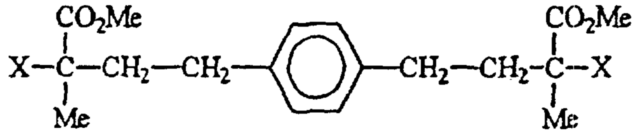

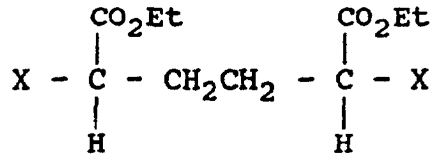

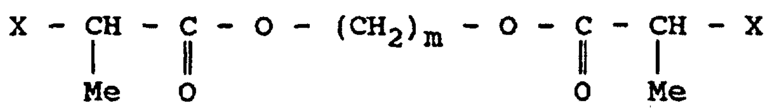

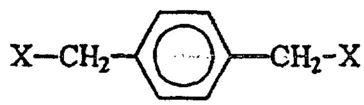

avec X = halogène, tel que Br et Cl ; et m = entier de 1 à 10.

L'emploi d'un amorceur bifonctionnel permet la préparation de copolymères triséquencés de type A(b)B(b)A, en synthétisant d'abord le bloc central difonctionnel, qui sert à amorcer la polymérisation du monomère A.

Les composés générateurs de radicaux multifonctionnels peuvent être constitués d'au moins trois groupements générateurs de radicaux monofonctionnels $A^1$, $A^2$ et $A^3$ issus des classes (c) à (j) précitées reliés entre eux par un cycle benzénique, comme, par exemple, ceux répondant à la formule :

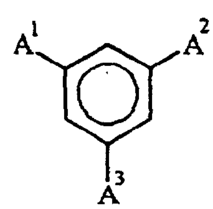

D'autres composés générateurs de radicaux bifonctionnels sont les tri- ou tétrahalométhanes et les dérivés trichlorométhylés des classes (a) et (b) précitées, ces mêmes tri- et tétrahalométhanes pouvant également servir de composés générateurs de radicaux multifonctionnels.

On pourrait également utiliser d'autres composés générateurs de radicaux difonctionnels que ceux représentés ci-dessus, notamment ceux de la famille des anhydrides acétiques comme l'anhydride d'acide chloroacétique et l'anhydride d'acide chlorodifluoroacétique.

Un autre moyen d'amorcer la polymérisation consiste à amorcer celle-ci à l'aide d'amorceurs radicalaires couramment utilisés en polymérisation radicalaire. Ainsi, les familles d'amorceurs utilisables peuvent être les suivantes :

- les composés azoiques, tels que le 2,2'-azo bis(2-méthyl)propane nitrile (ou AIBN), le 1,1'-azo bis(1-cyclohexanenitrile) et le 4,4'-azo bis(4-cyano acide valérique) ;
- les composés peroxydiques, tels que
  - les peroxydes de diacyle, comme le peroxyde de dibenzoyle et le peroxyde de didodécanoyle ;
  - les peroxydes de dialkyle, comme le peroxyde de ditertiobutyle et le peroxyde de diisopropyle ;
  - le peroxyde de dicumyle ;
  - les peroxy-dicarbonates ;
  - les peresters, comme le peracétate de tertiobutyle, le perpivalate de tertioamyle, le per-2-éthylhexanoate de butyle, le perpivalate de tertiobutyle et le perbenzoate de tertiobutyle ;
  - les hydroperoxydes, comme l'hydroperoxyde de tertiobutyle ;
  - les peroxydes inorganiques comme l'eau oxygénée ; et
  - les persulfates de sodium ou de potassium.

L'amorceur radicalaire peut être introduit dans le milieu réactionnel à raison de 10-100 000 ppm en poids sur la base du ou des monomères polymérisables. De préférence, le complexe de formule (I) servant à contrôler la polymérisation sera alors tel que a = 2.

La polymérisation selon l'invention peut également être conduite en présence d'un activateur, choisi notamment parmi les acides de Lewis, tels que les alcoolates d'aluminium, par exemple $Al(OiPr)_3$.

La longueur des chaînes polymères étant préalablement déterminée par le rapport molaire du ou des monomères (méth)acryliques ou vinyliques ou vinylidéniques ou diéniques sur le ou les composés générateurs de radicaux, ce rapport est de 1 - 100 000, avantageusement de 50 à 2 000. Quant au rapport molaire du métal M sur le (ou les) générateur(s) de radicaux, il est généralement compris entre 0,01 et 100, avantageusement entre 0,1 et 20. Le rapport molaire L:M, dans le cas où le complexe (I) est formé in situ, peut être compris entre 0,1 et 10, de préférence entre 0,5 et 2.

La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas dans le cas de la présente invention. Pour le procédé industriel, ceci constitue bien entendu un progrès important puisque les polymérisations ou copolymérisations menées dans ces conditions ne risquent plus de devenir totalement incontrôlées. D'une manière générale, la polymérisation ou copolymérisation sera effectuée à une température de 0°C à 130°C, avantageusement entre 40 et 90°C sans aucune perte d'activité du catalyseur.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'émulsifiants. Les émulsifiants peuvent être des surfactants anioniques, tels que le dodécylbenzène sulfonate de sodium, le dodécyl sulfate de sodium, le lauryl sulfate de sodium et leurs mélanges ou du type neutre comme les esters de glycol, les esters de sorbitane et de polyéthylène glycol tels que le monolaurate, le monopalmitate, oléate et stéarate de sorbitane et de polyéthylène glycol, les esters d'acides gras et de polyéthylène glycol tels que le stéarate de polyéthylène glycol et les éthers d'alcool gras et de polyéthylène glycol tels que les éthers stéarylique et cétylique de polyéthylène glycol.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :

- les hydrocarbures aromatiques (apolaires aprotiques) : benzène, toluène, éthylbenzène, xylène ;
- les hydrocarbures chlorés (polaires aprotiques) : chlorure de méthylène, chlorobenzène ;
- les éthers, tels que le diphényléther ;
- les éthers cycliques (polaires aprotiques) : tétrahydrofuranne, dioxane ;
- les esters (polaires) : acétate d'éthyle, acétate de cyclohexyle ;
- les cétones (polaires) : méthyl éthyl cétone, cyclohexanone.

Un solvant chloré pourra être utilisé s'il n'interagit pas ou très peu avec le composé (I) de façon à ne pas donner de radicaux parasites.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser

le diméthylformamide, le diméthylsulfoxyde, l'acétonitrile ou l'acétone.

D'une manière générale, le procédé de polymérisation et de copolymérisation suivant l'invention se déroule d'une manière identique pour l'homopolymérisation et la copolymérisation statistique. Pour la préparation de copolymères séquencés y compris les copolymères séquencés en étoile, les conditions expérimentales peuvent changer lors de l'addition d'un monomère différent du premier après la polymérisation du premier monomère. Par exemple, on peut faire varier la température dans un sens ou dans l'autre, le seconde dose pouvant être ajoutée avec un solvant. Pour la préparation de macromonomères ou de polymères $\alpha,\omega$ fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth)acryliques et vinyliques (vinylaromatiques, esters vinyliques comme acétate de vinyle, chlorure de vinyle et fluorure de vinyle) ainsi que vinylidéniques (fluorure de vinylidène) et diéniques.

Le système d'amorçage selon l'invention convient aussi pour la (co)polymérisation de monomères oléfiniques, éventuellement fluorés, comme l'éthylène, le butène, l'hexène, le 1-octène.

Par monomère acrylique au sens de la présente invention, on entend un monomère choisi parmi les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le groupe alkyle, le cas-échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec. -butyle, de tert. -butyle, de n-amyle, d'i-amyle, d'hexyle, d'éthyl-2 hexyle, de cyclohexyle, d'octyle, d'i-octyle, de décyle, de $\beta$-hydroxyéthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Par monomère diénique, on entend un diène choisi parmi les diènes linéaires ou cycliques, conjugués ou non-conjugués comme par exemple le butadiène, le 2,3-diméthylbutadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène; le 1,5-cyclooctadiène, le bicyclo[2,2,2]octa-2,5-diène, le cyclopentadiène, le 4,7,8,9-tétrahydroindène et l'isopropylidène tétrahydroindène.

Suivant l'invention, il a été constaté que, par une combinaison judicieuse d'un complexe de métal tel que défini précédemment, et d'un composé générateur de radicaux de polymérisation, on peut arriver à obtenir des homopolymères et des copolymères séquencés et statistiques parfaitement définis et contrôlés ainsi que des copolymères étoilés et des macromonomères et des polymères $\alpha,\omega$ fonctionnalisés (téléchéliques) qui n'ont jusqu'ici pu être synthétisé avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth)acryliques, vinyliques tels qu'obtenus par le procédé de l'invention présentent des masses moléculaires $\overline{Mn}$ se situant entre 400 et 10 000 000 g/mole et une polymolécularité $\overline{Mw}/\overline{Mn}$ particulièrement étroite, inférieure à 2, généralement inférieure à 1,5, étant comprise entre 1,05 et 1,5. Dans le cadre de la polymérisation radicalaire, ceci constitue un progrès important puisqu'il y a encore peu de temps, il était impensable d'obtenir des distributions de masses moléculaires ou polymolécularités $\overline{Mw}/\overline{Mn}$ inférieures à 1,5. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise las stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :

- polymérisation homogène et vivante. La polymérisation est vivante selon les critères généralement avancés : évolution linéaire des masses moyennes en fonction de la conversion, évolution linéaire de ln(1/(1-conversion)) en fonction du temps, reprise de la polymérisation après ajout d'une nouvelle dose de monomère (Penczek, S. dans *Makromol. Chem. Rapid. Commun.* 1991, *12*, 77) ;
- excellent contrôle moléculaire : $\overline{Mw}/\overline{Mn}$ étroit jusqu'à environ $\overline{Mw}/\overline{Mn}$ =1,1 ; bonne corrélation entre le $\overline{Mn}$ théorique et le $\overline{Mn}$ expérimental ; possibilité de préparation de copolymères séquencés y compris ceux en étoile ;
- polymérisation quantitative entraînant une consommation totale du monomère ;
- conditions de température douces allant de 0°C à 130°C et pression ordinaire ;
- le temps de réaction dépend de la concentration du milieu réactionnel. En effet, plus la concentration en monomère est faible, plus la cinétique de polymérisation sera lente ;
- compatibilité en milieux aqueux car les catalyseurs utilisés ne se dégradent pas en présence d'eau. Possibilité de polymérisation en émulsion et suspension, en présence ou non d'émulsifiants ;
- possibilité de stéréocontrôle, c'est-à-dire du contrôle de la tacticité hétéro, syndio ou isotactique, en utilisant des catalyseurs chiraux ;
- excellent contrôle de la synthèse des polymères ou copolymères obtenus dont les masses moléculaires varient entre 400 et 10 000 000 g/mole ;
- la résistance à la dégradation thermique des polymères et copolymères est améliorés en raison de l'absence de réactions de terminaison (combinaisons et disproportions), pouvant être montrée notamment par analyse thermogravimétrique ;
- obtention de nouveaux produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux ;
- obtention de matériaux à propriétés améliorées ; l'absence de doubles liaisons terminales permet d'augmenter la température de dépolymérisation des polymères, notamment du PMMA ;
- polymérisation contrôlée qui permet d'éviter l'autoaccélération de la polymérisation (appelée effet de gel ou effet Trommsdorf). Le contrôle de la polymérisation par le complexe du cuivre permet d'éviter l'autoaccélération subite de la polymérisation avec prise en masse très rapide. Ce phénomène est en général néfaste pour l'industriel et le produit. En particulier, pour le PMMA devant se présenter sous forme de plaques coulées, il est important que le polymérisation soit contrôlée afin d'éviter l'apparition de bulles, ou de défauts à la surface de la plaque. On peut parvenir à éviter le point de gel à l'aide de cycles, parfois longs, de températures adaptés. Une seule température est préférentiellement utilisée, ce qui est une simplification pour le procédé.

On donne ci-après des exemples non limitatifs décrivant la préparation de polymères tels qu'obtenus suivant le procédé de la présente invention.

Les masses moléculaires moyenne en nombre expérimentales ($\overline{Mn}_{exp}$) sont obtenues par chromatographie de perméation sur gel (GPC) calibré avec des étalons de poly(méthacrylate de méthyle) (PMMA) monodisperses, sauf indication contraire. Les masses moléculaires moyennes en nombre théoriques ($\overline{Mn}_{théo}$) sont calculées à partir du rapport molaire monomère/amorceur, corrigé par le rendement ($\overline{Mn}_{théo}$ = ([M] x rendement)/([amorceur] x 100), [M] étant la concentration en monomère. Le facteur f est le facteur d'efficacité d'amorçage, soit $\overline{Mn}_{théo}/\overline{Mn}_{exp}$. L'indice de polymolécularité ou polydispersité est $\overline{Mw}/\overline{Mn}$.

EXEMPLE 1

Polymérisation en masse de l'acrylate de n-butvle

Dans un réacteur de 2 litres, muni d'une agitation mécanique et maintenu sous une atmosphère protectrice d'azote, on mélange :

- 200 g d'acrylate de n-butyle ;
- 0,72 g de bromure de cuivre (I) ;
- 0,93 g de (1-bromoéthyl)benzène $C_6H_5CHBrCH_3$ ; et
- 1,45 g du ligand de formule (L1) :

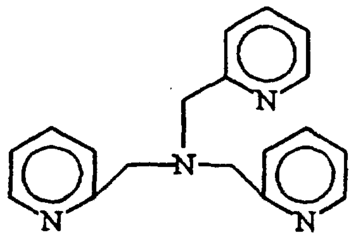

(L1)

Le mélange est porté à 120°C.

On procède au cours du temps à des prélèvements. Ceci permet de calculer la conversion en polymère obtenue après évaporation sous vide (25 mbar, 140°C, 20 minutes) du monomère restant dans un échantillon.

Les résultats sont rapportés dans le Tableau 1.

Tableau 1

| t (h) | Conversion. (%) | $\overline{Mn}_{exp}$ (g/mole) | $\overline{Mw}/\overline{Mn}$ | ln (1/(1-conversion)) |
|---|---|---|---|---|
| 0 | 0 | 0 | 0 | 0 |
| 0,25 | 23 | 8 600 | 2,0 | 0,26 |
| 0,67 | 43 | 14 940 | 1,7 | 0,57 |
| 1,0 | 70 | 25 820 | 1,5 | 1,20 |
| 1,25 | 82 | 30 600* | 1,4 | 1,74 |

* $\overline{Mn}$ théorique = 32 800 g/mole

L'évolution linéaire des masses moyennes $\overline{Mn}_{exp}$ en fonction de la conversion ainsi que de ln(1/(1-conversion)) en fonction du temps montre que le système est vivant (bon contrôle de la polymérisation).

EXEMPLE 2

Polymérisation en masse de l'acrylate de n-butyle

On procède comme à l'Exemple 1 mais à 100°C. Les résultats sont rapportés dans le Tableau 2.

Tableau 2

| t (h) | Conversion (%) | $\overline{Mn}_{exp}$ (g/mole) | $\overline{Mw}/\overline{Mn}$ |
|---|---|---|---|
| 0 | 0 | 0 | - |
| 0,25 | 41 | - | - |
| 0,75 | 52 | 16 300 | 1,6 |
| 1,25 | 74 | 20 070 | 2,0 |
| 2,75 | 86 | 27 000* | 1,7 |

* $\overline{Mn}$ théorique = 34 400 g/mole

On constate que $\overline{Mn}$ varie linéairement avec la conversion.

EXEMPLE 3

Polymérisation en masse du styrène

On procède comme à l'Exemple 1, mais on remplace l'acrylate de butyle par le styrène (200 g), et la température est de 80°C. Les résultats sont rapportés dans le Tableau 3.

Tableau 3

| t (h) | Conversion (%) | $\overline{Mn}_{exp}$ (g/mole) | $\overline{Mw}/\overline{Mn}$ | ln (1/(1-conversion)) |
|---|---|---|---|---|
| 0 | 0 | 0 | - | 0 |
| 0,5 | 7,2 | - | - | 0,07 |
| 1,0 | 11,6 | - | - | 0,12 |
| 3,75 | 31,8 | - | - | 0,38 |
| 4,25 | 31 | - | - | 0,37 |
| 4,83 | 36,2 | 24860* | 1,3 | 0,45 |

* $\overline{Mn}$ théorique = 14 500 g/mole

L'indice de polymolécularité est inférieur à 1,5, signe d'une polymérisation radicalaire contrôlée. De plus, le logarithme ln(1/(1-conversion)) varie linéairement en fonction du temps.

EXEMPLE 4

Polymérisation en masse du styrène

On procède comme à l'Exemple 3, mais on utilise du chlorure de cuivre (I) à la place du bromure de cuivre (I) et du chlorure de (1-chloroéthyl)benzène ($C_6H_5CHClCH_3$) au lieu de $C_6H_5CHBrCH_3$.

Au bout de 37 heures, on arrête la polymérisation et on récupère le polymère pour analyse.

Conversion - 77,5%
$\overline{Mn}_{exp}$ = 37 000 g/mole
$\overline{Mn}_{théo}$ = 31 000 g/mole
$\overline{Mw}/\overline{Mn}$ = 1,2.

Il y a un très bon accord entre la masse visée et la masse expérimentale. De plus, l'indice de polymolécularité est très bas (et inférieur à 1,5), signe d'une polymérisation radicalaire contrôlée.

EXEMPLE 5 (COMPARATIF)

Polymérisation en masse de l'acrylate de n-butyle

Dans un réacteur de 2 litres, muni d'une agitation mécanique et maintenu sous une atmosphère protectrice d'azote, on mélange :

- 300 g d'acrylate de n-butyle ;
- 1,43 g de (1-bromoéthyl)benzène ($C_6H_5CHBrCH_3$) ;
- 3,30 g de bromure de cuivre ; et
- 3,55 g de bipyridine.

La température de polymérisation est de 130°C.

Au bout de 5,5 heures, on arrête la polymérisation et on récupère le polymère pour analyse.

Conversion = 91,2%
$\overline{Mn}_{exp}$ = 24 010 g/mole
$\overline{Mn}_{théo}$ = 36 500 g/mole
$\overline{Mw}/\overline{Mn}$ = 1,7.

L'indice de polymolécularité est, ici, supérieur à 1,5.

EXEMPLE 6

Polymérisation en solution de l'acrylate de n-butyle

Dans un réacteur de 2 litres, muni d'une agitation mécanique et maintenu sous une atmosphère protectrice d'azote, on mélange :

- 300 g d'acrylate de n-butyle dilué dans 150 g de diphényléther ;
- 1,08 g de bromure de cuivre (I) ;
- 1,02 g de dibromoxylène (para-$BrCH_2C_6H_4CH_2$para-Br) ; et
- 2,18 g du ligand L1 (cf Exemple 1).

Le mélange est porté à 100°C.
On procède au cours du temps à des prélèvements. Ceci permet de calculer la conversion en polymère obtenue après évaporation sous vide (25 mbar, 140°C, 20 minutes) du monomère restant dans un échantillon.
Les résultats sont rapportés dans le Tableau 4.

Tableau 4

| t (h) | Conversion (%) | $\overline{Mn}_{exp}$ (g/mole) | $\overline{Mw}/\overline{Mn}$ | ln (1/(1-conversion)) |
|---|---|---|---|---|
| 0 | 0 | 0 | - | 0 |
| 0,50 | 43 | 34 930 | 1,3 | 0,56 |
| 1,83 | 82 | 57 200* | 1,5 | 1,71 |

* $\overline{Mn}_{théo}$ = 32 800 g/mole
Conversion = 82%

L'évolution linéaire des masses moyennes $\overline{Mn}_{exp}$ en fonction de la conversion ainsi que de ln(l/(1-conversion)) en fonction du temps montre que le système est vivant (bon contrôle de la polymérisation).

EXEMPLE 7 (COMPARATIF)

Polymérisation en solution de l'acrylate de n-butyle

On procède comme à l'Exemple 6, mais en remplaçant les 2,18 g de (L1) par 3,55 g de bipyridine. Les résultats sont rapportés dans le Tableau 5.

Tableau 5

| t (h) | Conversion (%) | $\overline{Mn}_{exp}$ (g/nole) | $\overline{Mw}/\overline{Mn}$ | ln (1/(1-conversion)) |
|---|---|---|---|---|
| 0 | 0 | 0 | - | 0 |
| 0,5 | 2 | - | - | 0,02 |
| 1,0 | 5 | - | - | 0,05 |
| 3,0 | 11 | - | - | 0,12 |
| 4,0 | 14 | - | - | 0,15 |
| 5,83 | 49,5 | - | - | 0,10 |
| 23,08 | 61,3 | 41 900 | 1,4 | 0,95 |
| 24,50 | 66,8 | - | - | 1,10 |
| 27,00 | 70,6 | - | - | 1,22 |
| 28,0 | 67 | - | - | 1,11 |
| 29,83 | 71,6 | 46 500* | 1,4 | 1,26 |

* $\overline{Mn}_{théo}$ = 28 640 g/mole
Conversion = 71,6%.

Avec le ligand bipyridine, la vitesse de polymérisation est moins forte qu'avec le ligand (L1). En effet, il faut 1,83 h pour arriver à 82% de conversion avec le ligand (L1), mais il faut 29,83 h pour arriver à 71,6% avec le ligand bipyridine.

EXEMPLE 8

Polymérisation en masse du styrène

Dans un réacteur de 250 $cm^3$ préalablement dégazé à l'argon et muni d'une agitation mécanique, on introduit :

- 93 g de styrène ;
- 0,414 g (2,23 x $10^{-3}$ mole) de (1-bromoéthyl) benzène ($C_6H_5CHBrCH_3$) ;
- 0,221 g (2,23 x $10^{-3}$ mole) de chlorure de cuivre (I) ; et
- 0,771 g (3,3 x $10^{-3}$ mole) du ligand de formule (L2) :

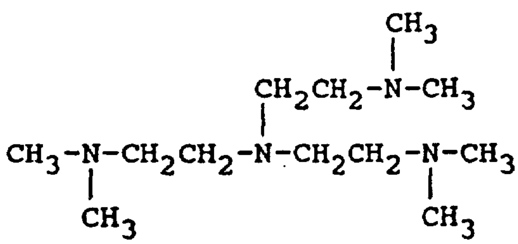

La polymérisation démarre lorsque le mélange réactionnel est porté à la température souhaitée, soit ici 110°C. Par des prélèvements au cours du temps, il est possible de calculer la conversion en polymère.
Les résultats sont rapportés dans le Tableau 6.

Tableau 6

| t (min.) | Conversion (%) | $\overline{Mn}_{théo}$ (g/mole) | $\overline{Mn}_{exp}$ (g/mole) | $\overline{Mw}/\overline{Mn}$ |
|---|---|---|---|---|
| 40 | 10,4 | 4340 | 4860 | 1,38 |
| 80 | 16 | 6670 | 7100 | 1,53 |
| 110 | 21 | 8760 | 9830 | 1,51 |
| 140 | 25 | 10420 | 12730 | 1,47 |
| 200 | 35 | 14600 | 17170 | 1,36 |
| 260 | 46 | 19200 | 21150 | 1,37 |
| 350 | 55 | 22950 | 25330 | 1,30 |
| 380 | 63 | 26300 | 27130 | 1,36 |
| $Mn_{théo}$ = 26 300 g/mole<br>$\overline{Mn}_{exp}$ = 27 130 g/mole<br>Conversion = 63%. | | | | |

Les indices de polymolécularité sont particulièrement bas, et la $\overline{Mn}_{exp}$ varie linéairement avec la conversion, signes d'une polymérisation contrôlée.

EXEMPLE 9

Polymérisation en masse du styrène

On procède comme à l'Exemple 8, mais avec :

- 102,8 g de styrene ;

- 0,244 g de chlorure de cuivre (I) ;
- 0,457 g de (1-bromoéthyl)benzène ($C_6H_5CHBrCH_3$) ;
- 0,85 g de ligand (L2) (cf Exemple 8) ; et
- une température de 120°C.

Les résultats sont rapportés dans le Tableau 7.

Tableau 7

| t (min.) | Conversion (%) | $\overline{Mn}_{théo}$ (g/mole) | $\overline{Mn}_{exp}$ (g/mole) | $\overline{Mw}/\overline{Mn}$ |
|---|---|---|---|---|
| 15 | 14,8 | 6160 | 6930 | 1,33 |
| 30 | 20,2 | 8400 | 9720 | 1,36 |
| 60 | 27,8 | 11560 | 17280 | 1,25 |
| 80 | 41,1 | 17100 | 20501 | 1,33 |
| 130 | 60,2 | 25040 | 30630 | 1,33 |
| 140 | 63,9 | 26580 | 33250 | 1,30 |
| 175 | 74,4 | 30950 | 36480 | 1,41 |
| $\overline{Mn}_{théo}$ = 30 960 g/mole<br>$\overline{Mn}_{exp}$ = 36 480 g/mole<br>Conversion = 74,4%. | | | | |

Les indices de polymolécularité sont particulièrement bas, et la $\overline{Mn}_{exp}$ varie linéairement avec la conversion, signes d'une polymérisation contrôlée.

EXEMPLE 10

Polymérisation en masse du styrène

Dans un tube de Schlenck préalablement dégazé et agité à l'aide d'un barreau aimanté, on introduit la moitié du styrène devant être polymérisé (1,5 g), puis le chlorure de cuivre (I) (7,14 x $10^{-3}$ g) et le (1-bromoéthyl)benzène ($C_6H_5CHBrCH_3$) (1,33 x $10^{-2}$ g). On ajoute alors une solution contenant le reste du styrène (1,5 g) à polymériser et le ligand (L2) (cf Exemple 8). Le tube de Schlenck est placé dans un bain d'huile porté à 80°C, puis la température de l'huile est portée à 110°C.

Lorsque la polymérisation s'arrête par prise en masse, le contenu du Schlenck est dissous dans le toluène puis filtré sur papier. On élimine alors une partie du toluène et le mélange visqueux obtenu est précipité dans le méthanol. Le polystyrène précipité est ensuite séché et pesé.

Durée : 4h30
T : 110°C
masse de polymère récupéré : 2,52 g
conversion : 99%
$\overline{Mn}_{exp}$ = 59 000 g/mole
$\overline{Mn}_{théo}$ = 41 200 g/mole
$\overline{Mw}/\overline{Mn}$ = 1,27.

On note que l'indice de polymolécularité est très bas et inférieur à 1,5, signe d'une polymérisation radicalaire contrôlée.

EXEMPLE 11

Polymérisation en masse du styrène

On reprend les conditions de l'Exemple 10, mais à 100°C.

Durée : 48h

Masse de polymère récupéré : 2,11 g
Conversion : 93%
$\overline{Mn}_{exp}$ = 43 882 g/mole
$\overline{Mn}_{théo}$ = 38 700 g/mole
$\overline{Mw}/\overline{Mn}$ = 1,43.

On note que l'indice de polymolécularité est très bas et inférieur à 1,5, signe d'une polymérisation radicalaire contrôlée.

EXEMPLE 12

Polymérisation en masse du styrène

On procède comme à l'Exemple 8, mais avec :

- 104 g de styrène ;
- 0,481 g de (1-bromoéthyl)benzène ($C_6H_5CHBrCH_3$) ;
- 0,257 g de ligand (L3) :

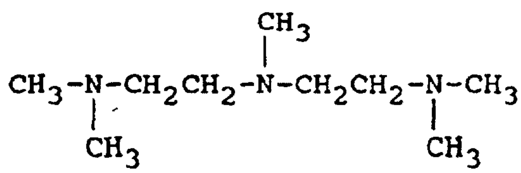 ;

et
- une température de 120°C.

Les résultats sont rapportés dans le Tableau 8.

Tableau 8

| t (min.) | Conversion (%) | $\overline{Mn}_{théo}$ (g/mole) | $\overline{Mn}_{exp}$ (g/mole) | $\overline{Mw}/\overline{Mn}$ |
|---|---|---|---|---|
| 85 | 16,5 | 6 600 | 6 100 | 1,4 |
| 175 | 32 | 12 800 | 11 600 | 1,3 |
| 230 | 41,8 | 16 700 | 14 300 | 1,3 |
| 280 | 49,7 | 19 900 | 15 700 | 1,3 |
| 465 | 66 | 26 400 | 23 300 | 1,2 |
| 510 | 77,2 | 31 000 | 25 700 | 1,3 |

Les indices de polymolécularité sont faibles (<1,5), et la $\overline{Mn}_{exp}$ varie linéairement avec la conversion, signes d'une polymérisation contrôlée.

EXEMPLE 13

Polymérisation en masse du styrène

On procède comme à l'Exemple 8, mais avec :

- 104 g de styrène ;
- 0,481 g de (1-bromoéthyl)benzène ($C_6H_5CHBrCH_3$) ;
- 0,257 g de chlorure cuivreux ;
- 1,119 g de ligand (L4) :

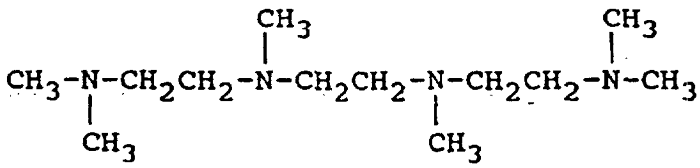

- une température de 120°C.

Les résultats sont rapportés dans le Tableau 9.

Tableau 9

| t (min.) | Conversion (%) | $\overline{Mn}_{théo}$ (g/mole) | $\overline{Mn}_{exp}$ (g/mole) | $\overline{Mw}/\overline{Mn}$ |
|---|---|---|---|---|
| 30 | 22,2 | 8 900 | 8 500 | 1,4 |
| 60 | 30 | 12 000 | 12 000 | 1,3 |
| 90 | 41,7 | 16 700 | 15 700 | 1,2 |
| 130 | 59,3 | 23 700 | 24 200 | 1,2 |
| 160 | 74,3 | 29 700 | 31 700 | 1,3 |

Les indices de polymolécularité sont faibles (<1,5), et la $\overline{Mn}_{exp}$ varie linéairement avec la conversion, signes d'une polymérisation contrôlée.

**Revendications**

1. Procédé de polymérisation ou copolymérisation radicalaire contrôlée de monomères (méth)acryliques et/ou vinyliques et/ou vinylidéniques et/ou diéniques, **caractérisé par le fait que** l'on polymérise ou copolymérise en masse, solution, émulsion ou suspension, à une température pouvant descendre jusqu'à 0°C, au moins un desdits monomères en présence d'un système d'amorçage comprenant :

   - au moins un composé générateur de radicaux ; et
   - au moins un catalyseur constitué par un complexe de métal représenté par la formule suivante (I) :

$$MA_a(L)_n \qquad (I)$$

   dans laquelle :

   - M représente Cu, Ag ou Au ;
   - A représente un halogène, un pseudo-halogène ou un groupement carboxylate ;
   - les L sont des ligands du métal M, choisis indépendamment parmi ceux représentés par la formule (II) suivante :

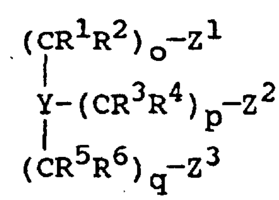

(II)

dans laquelle :

- Y représente N ou P ;

- $R^1$, $R^2$, $R^3$, $R^4$, $R^5$ et $R^6$ représentent chacun indépendamment un atome d'hydrogène, un groupe alkyle en $C_1$-$C_{10}$, un groupe aromatique ou un groupe hétéroaromatique ;
- $Z^1$, $Z^2$ et $Z^3$ représentent chacun indépendamment l'un parmi :

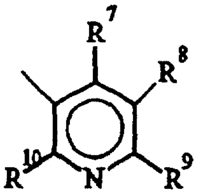 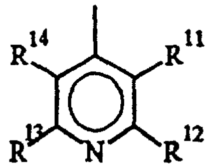 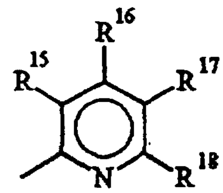 ;

-$NR^{19}R^{20}$

où :

- les radicaux $R^7$ à $R^{18}$ représentent chacun indépendamment un atome d'hydrogène, un groupe alkyle en $C_1$-$C_{10}$, un groupe aromatique ou un groupe hétéroaromatique ; et
- $R^{19}$ et $R^{20}$ représentent chacun indépendamment un atome d'hydrogène, un atome d'halogène, un radical alkyle en $C_1$-$C_{10}$, un radical alcoxy en $C_1$-$C_{10}$ ou un radical -$(CR^{21}R^{22})_rNR^{23}R^{24}$, où $R^{21}$, $R^{22}$, $R^{23}$ et $R^{24}$ représentent chacun indépendamment un atome d'hydrogène, un groupe alkyle en $C_1$-$C_{10}$, un groupe aromatique ou un groupe hétéroaromatique, et r est un entier de 1 à 10 ;

au plus deux parmi $Z^1$, $Z^2$ et $Z^3$ pouvant en outre représenter chacun un atome d'hydrogène;

- o, p et q représentent chacun indépendamment un entier de 1 à 10 et peuvent en outre représenter 0 sauf si le reste respectivement $Z^1$, $Z^2$ ou $Z^3$ associé représente -$NR^{19}R^{20}$ ;

- a vaut 1 ou 2 ;
- n vaut 1, 2 ou 3.

2. Procédé selon la revendication 1, **caractérisé par le fait que** M représente Cu.

3. Procédé selon l'une des revendications 1 et 2, **caractérisé par le fait que** A représente un halogène choisi parmi Cl, Br, F et I, ou un pseudo-halogène choisi parmi CN, NCS, $NO_2$ et $N_3$, ou un groupement carboxylate tel qu'acétate.

4. Procédé selon l'une des revendications 1 à 3 **caractérisé par le fait que** les ligands L sont choisis parmi ceux de formule :

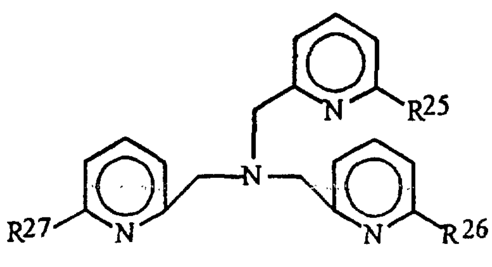

(IIa)

avec $R^{25} = R^{26} = R^{27} = H$
$R^{25} = H$ ; et $R^{26} = R^{27} = Me$
$R^{25} = R^{26} = R^{27} = Me$ ;

et les composés des formules :

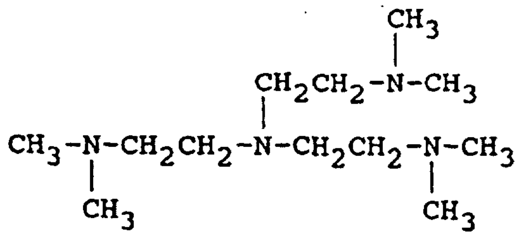 ;

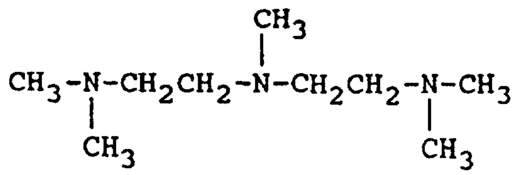 ;

et

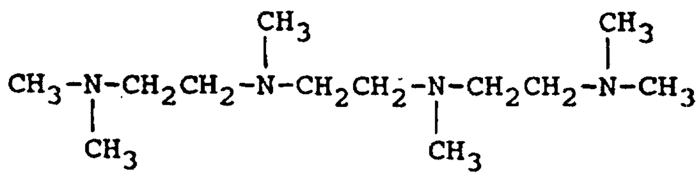

**5.** Procédé selon l'une des revendications 1 à 4, **caractérisé par le fait que** le complexe de formulé (I) est formé in situ dans le milieu réactionnel à partir du sel de métal de transition M avec A et du ligand polydentate L.

**6.** Procédé selon l'une des revendications 1 à 5, **caractérisé par le fait que** le composé générateur de radicaux libres est monofonctionnel et choisi dans les classes des composés suivants :

(a) les dérivés de formule :

$$CEZ_3$$

où :

- E = Cl, Br, I, F, H, $-CR^{28}R^{29}OH$, $R^{28}$ et $R^{29}$ représentant chacun indépendamment hydrogène ou alkyle en $C_1$-$C_{14}$ ; et
- Z = Cl ou Br ;

(b) les dérivés de formule :

$$R^{30}CCl_3$$

où $R^{30}$ représente phényle ; benzyle ; benzoyle ; alcoxycarbonyle ; $R^{31}CO$ avec $R^{31}$ représentant alkyle en $C_1$-$C_{14}$ ou aryle ; alkyle ; mésityle ; trifluorométhyle; ou nitro ;

(c) les dérivés de formule :

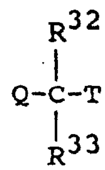

dans laquelle :

- Q représente un atome de chlore ou de brome ou un groupe acétate ou trifluoroacétate ou triflate ;
- $R^{32}$ représente un atome d'hydrogène, un groupe alkyle en $C_1$-$C_{14}$ ou un groupe aromatique, ou un groupe $-CH_2OH$ ;
- T représente un groupe

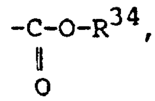

avec $R^{34}$ représentant hydrogène ou un groupe alkyle ou aromatique; un groupe CN ; un groupe

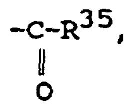

avec $R^{35}$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^{36}CO$, avec $R^{36}$ représentant alkyle en $C_1$-$C_{14}$ ou aryle ;
- $R^{33}$ représente un groupe entrant dans les définitions de $R^{32}$ ou de Q ou un groupe fonctionnel tel qu'hydroxyle, nitro, amino substitué ou non, alcoxy en $C_1$-$C_{14}$, acyle, acide carboxylique, ester ;

(d) les composés lactones ou lactames halogénés en $\alpha$ ;

(e) les N-halosuccinimides et les N-halophtalimides ;

(f) les halogénures d'alkyl-sulfonyle et les halogénures d'arène sulfonyle ;

(g) les composés de formule :

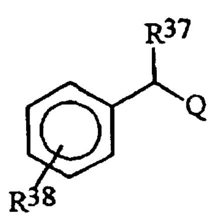

où :

- $R^{37}$ représente un atome d'hydrogène, un groupe alkyle en $C_1$-$C_{14}$ ou un groupe acide carboxylique, ester, nitrile ou cétone ;
- $R^{38}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ; et
- Q a la signification donnée précédemment ;

(h) les composés de formule :

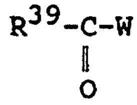

où :

- $R^{39}$ représente alkyle en $C_1$-$C_{14}$ ou aryle ;
- W représente halogène ou pseudohalogène ;

(i) les composés de formule :

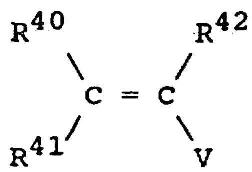

où :

- $R^{40}$, $R^{41}$ et $R^{42}$ représentent chacun indépendamment alkyle en $C_1$-$C_{14}$ ou aryle ; et
- V représente halogène, acétate, trifluoroacétate, triflate ;

(j) les halogénures aromatiques de formule :

Ar - U

où :

- Ar représente un groupement aromatique, tel que $C_6H_5$- pouvant être substitué en position ortho, méta ou para par un groupement électroattracteur ou électrodonneur ; et
- U représente un halogène.

7. Procédé selon l'une des revendications 1 à 5, **caractérisé par le fait que** le composé générateur de radicaux est multifonctionnel et est constitué par au moins deux groupements générateurs de radicaux monofonctionnels issus des classes (c) à (j) définies à la revendication 6, reliés par une chaîne d'unités méthylène ou par un cycle benzénique ou par une combinaison des deux, ou est choisi parmi les anhydrides acétiques comme l'anhydride d'acide chloroacétique et l'anhydride d'acide chlorodifluoroacétique, et les tri- ou tétrahalométhanes et les dérivés trichlorométhylés des classes (a) et (b) définies à la revendication 6.

8. Procédé selon l'une des revendications 1 à 5, **caractérisé par le fait que** le composé générateur de radicaux est un amorceur radicalaire choisi parmi les composés azoïques, tels que le 2,2'-azo bis(2-méthyl)propane nitrile (ou AIBN), le 1,1'-azo bis(l-cyclohexanenitrile) et le 4,4'-azo bis(4-cyano acide valérique) ; les composés peroxydiques, tels que les peroxydes de diacyle, comme le peroxyde de dibenzoyle et le peroxyde de didodécanoyle ; les peroxydes de dialkyle, comme le peroxyde de ditertiobutyle et le peroxyde de diisopropyle ; le peroxyde de dicumyle ; les peroxy-dicarbonates ; les peresters, comme le peracétate de tertiobutyle, le perpivalate de tertioamyle, le per-2-éthylhexanoate de butyle, le perpivalate de tertiobutyle et le perbenzoate de tertiobutyle ; les hydroperoxydes, comme l'hydroperoxyde de tertiobutyle ; les peroxydes inorganiques comme l'eau oxygénée ; et les persulfates de sodium ou de potassium.

9. Procédé selon l'une des revendications 1 à 8, **caractérisé par le fait que** l'on conduit la polymérisation en présence d'au moins un activateur choisi notamment parmi les acides de Lewis.

**10.** Procédé selon l'une quelconque des revendications 1 à 9, **caractérisé par le fait que** le rapport molaire du ou des monomères sur le ou les composés générateurs de radicaux est de 1 - 100 000.

**11.** Procédé selon l'une des revendications 1 à 10, **caractérisé par le fait que** le rapport molaire du métal M sur le (ou les) générateur(s) de radicaux est de 0,01 à 100.

**12.** Procédé selon l'une des revendications 6 à 11, **caractérisé par le fait que** le rapport molaire L:M est compris entre 0,1 et 10, de préférence entre 0,5 et 2.

**13.** Procédé selon l'une quelconque des revendications 1 à 12, **caractérisé par le fait que** le polymérisation ou copolymérisation est effectuée à une température de 0°C à 130°C.

**14.** Procédé selon l'une quelconque des revendications 1 à 13, **caractérisé par le fait que** les monomères polymérisables ou copolymérisables comprennent au moins un monomère choisi parmi les méthacrylates, les acrylates, les dérivés vinylaromatiques, l'acétate de vinyle le chlorure de vinyle, le fluorure de vinyle et le fluorure de vinylidène.

**15.** Procédé selon la revendication 14, **caractérisé par le fait que** le monomère est choisi dans le groupe comprenant le méthacrylate de méthyle, le méthacrylate d'éthyle, le méthacrylate de n-butyle, l'acrylonitrile et le styrène.

**16.** Procédé selon l'une des revendications 1 à 15, **caractérisé par le fait qu'**on conduit une copolymérisation séquencée en introduisant, dans le milieu de polymérisation dans lequel le premier monomère a été polymérisé, un second monomère le cas échéant avec un nouvel ajout de système d'amorçage.

**17.** Procédé selon l'une des revendications 1 à 16, **caractérisé par le fait que** l'on conduit la (co)polymérisation en milieu aqueux, en présence ou non d'émulsifiants, en présence d'un solvant organique ou d'un mélange de solvants organiques, tels que les hydrocarbures aromatiques, les hydrocarbures chlorés, les éthers, les éthers cycliques et les cétones.

## Claims

**1.** Process for the controlled radical polymerization or copolymerization of (meth) acrylic and/or vinyl and/or vinylidene and/or diene monomers, **characterized in that** at least one of the said monomers is polymerized or copolymerized in bulk, solution, emulsion or suspension at a temperature which may be as low as 0°C, in the presence of an initiator system comprising :

- at least one radical-generator compound; and
- at least one catalyst consisting of a metal complex represented by formula (I) below:

$$MA_a(L)_n \qquad (I)$$

in which:

- M represents Cu, Ag or Au;
- A represents a halogen, a pseudohalogen or a carboxylate group;
- the groups L are ligands of the metal M which are chosen independently from those represented by formula (II) below:

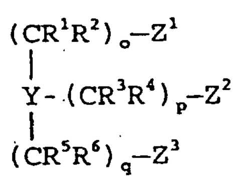

(II)

in which:

- Y represents N or P;
- $R^1$, $R^2$, $R^3$, $R^4$, $R^5$ and $R^6$ each independently represent a hydrogen atom, a $C_1$-$C_{10}$ alkyl group, an aromatic group or a heteroaromatic group;

  $Z^1$, $Z^2$ and $Z^3$ each independently represent one of the following:

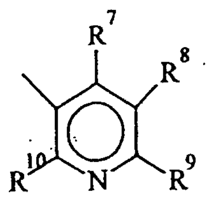
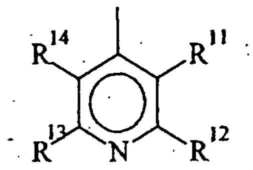
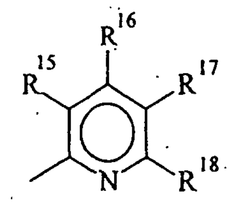
;

-$NR^{19}R^{20}$

where :

- the radicals $R^7$ to $R^{18}$ each independently represent a hydrogen atom, a $C_1$-$C_{10}$ alkyl group, an aromatic group or a heteroaromatic group; and

  $R^{19}$ and $R^{20}$ each independently represent a hydrogen atom, a halogen atom, a $C_1$-$C_{10}$ alkyl radical, a $C_1$-$C_{10}$ alkoxy radical or a radical-$(CR^{21}R^{22})_rNR^{23}R^{24}$, where $R^{21}$, $R^{22}$, $R^{23}$ and $R^{24}$ each independently represent a hydrogen atom, a $C_1$-$C_{10}$ alkyl group, an aromatic group or a heteroaromatic group, and r is an integer from 1 to 10;

it being also possible for not more than two from among $Z^1$, $Z^2$ and $Z^3$ each to represent a hydrogen atom;

o, p and q each independently represent an integer from 1 to 10, and may also represent 0 except if the associated residue $Z^1$, $Z^2$ or $Z^3$, respectively, represents -$NR^{19}R^{20}$;

- a is 1 or 2;
- n is 1, 2 or 3.

2. Process according to Claim 1, **characterized in that** M represents Cu.

3. Process according to either of Claims 1 and 2, **characterized in that** A represents a halogen chosen from C1, Br, F and I, or a pseudohalogen chosen from CN, NCS, $NO_2$ and $N_3$, or a carboxylate group such as acetate.

4. Process according to one of Claims 1 to 3, **characterized in that** the ligands L are chosen from those of formula:

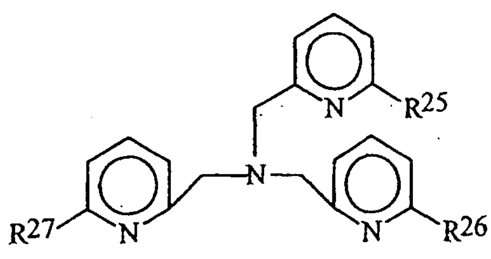
(IIa)

with $R^{25} = R^{26} = R^{27} = H$

$R^{25} = H$ ; and $R^{26} = R^{27} = Me$

$R^{25} = R^{26} = R^{27} = Me$ ;

and the compounds of formulae:

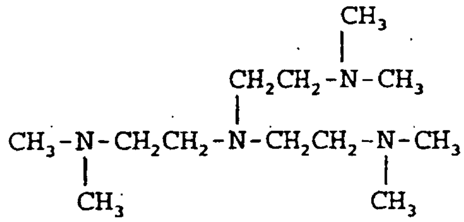 ;

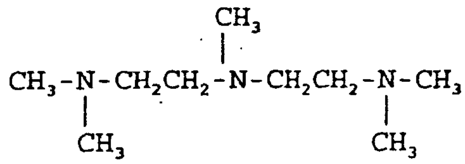 ;

and

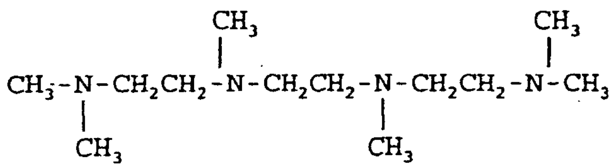

5. Process according to one of Claims 1 to 4, **characterized in that** the complex of formula (I) is formed in situ in the reaction medium from the salt of the transition metal M with A and from the polydentate ligand L.

6. Process according to one of Claims 1 to 5, **characterized in that** the free-radical-generator compound is monofunctional and chosen from the following classes of compounds:

(a) derivatives of formula:

$$CEZ_3$$

where :

- E = Cl, Br, I, F, H, $-CR^{28}R^{29}OH$, $R^{28}$ and $R^{29}$ each independently representing hydrogen or $C_1$-$C_{14}$ alkyl ; and
- Z = Cl or Br,

(b) derivatives of formula:

$$R^{30}CCl_3$$

where $R^{30}$ represents phenyl ; benzyl; benzoyl; alkoxycarbonyl; $R^{31}CO$ with $R^{31}$ representing $C_1$-$C_{14}$ alkyl or aryl; alkyl; mesityl; trifluoromethyl; or nitro,

(c) derivatives of formula:

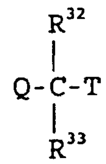

in which:

- Q represents a chlorine or bromine atom or an acetate or trifluoroacetate or triflate group;
- $R^{32}$ represents a atom, a $C_1$-$C_{14}$ alkyl group or an aromatic group or a -$CH_2OH$ group;
- T represents a group

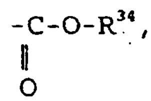

with $R^{34}$ representing hydrogen or an alkyl or aromatic group; a CN group; a group

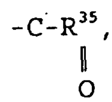

with $R^{35}$ representing $C_1$-$C_{14}$ alkyl, phenyl or isocyanate ; a hydroxyl group; a nitro group; a substituted or unsubstituted amino group; a $C_1$-$C_{14}$ alkoxy group; a group $R^{36}CO$, with $R^{36}$ representing $C_1$-$C_{14}$ alkyl or aryl;
- $R^{33}$ represents a group falling within the definitions of $R^{32}$ or of Q or a functional group such as hydroxyl, nitro, substituted or unsubstituted amino, $C_1$-$C_{14}$ alkoxy, acyl, carboxylic acid, ester;

(d) $\alpha$-halo lactone or lactam compounds;

(e) N-halosuccinimides, and N-halophthalimides;

(f) alkylsulphonyl halides and arenesulphonyl halides;

(g) compounds of formula:

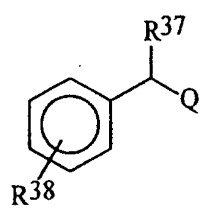

where:

- $R^{37}$ represents a hydrogen atom, a $C_1$-$C_{14}$ alkyl group or a carboxylic acid, ester, nitrite or ketone group;
- $R^{38}$ represents a hydrogen atom or a $C_1$-$C_{14}$ alkyl, hydroxyl, acyl, substituted or unsubstituted amine, nitro, $C_1$-$C_{14}$ alkoxy or sulphonate group; and
- Q has the meaning given above;

(h) compounds of formula:

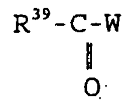

where:

- $R^{39}$ represents $C_1$-$C_{14}$ alkyl or aryl;
- W represents halogen or pseudohalogen;

(i) compounds of formula :

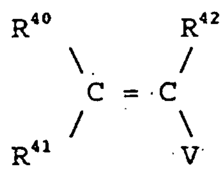

where:

- $R^{40}$, $R^{41}$ and $R^{42}$ each independently represent $C_1$-$C_{14}$ alkyl or aryl; and
- V represents halogen, acetate, trifluoroacetate or triflate;

(j) aromatic halides of formula:

Ar - U

where:

- Ar represents an aromatic group such as $C_6H_5$- which may be substituted in the ortho, meta or para position with an electron-withdrawing or electron-donating group, and
- U represents a halogen.

**7.** Process according to one of Claims 1 to 5, **characterized in that** the radical-generator compound is multifunctional and consists of at least two monofunctional radical-generator groups derived from classes (c) to (j) defined in Claim 6, connected by a chain of methylene units or by a benzene ring or by a combination of the two, or is chosen from acetic anhydrides such as chloroacetic anhydride and chlorodifluoroacetic anhydride, and tri- or tetrahalomethanes and trichloromethyl derivatives of classes (a) and (b) defined in Claim 6.

**8.** Process according to one of Claims 1 to 5, **characterized in that** the radical-generator compound is a radical initiator chosen from azo compounds, such as 2,2'-azobis(2-methyl)propanenitrile (or AIBN), 1,1'-azobis(1-cyclohexanenitrile) and 4,4'-azobis(4-cyanovaleric acid); peroxy compounds, such as diacyl peroxides, such as dibenzoyl peroxide and didodecanoyl peroxide; dialkyl peroxides, such as di-tert-butyl peroxide and diisopropyl peroxide; dicumyl peroxide; peroxy-dicarbonates; peresters such as tert-butyl peracetate, tert-amyl perpivalate, butyl 'per-2-ethylhexanoate, tert-butyl perpivalate and tert-butyl perbenzoate; hydroperoxides such as tert-butyl hydroperoxide; inorganic peroxides such as aqueous hydrogen peroxide' solution; and sodium or potassium persulphate.

**9.** Process according to one of Claims 1 to 8, **characterized in that** the polymerization is carried out in the presence of at least one activator chosen in particular from Lewis acids.

**10.** Process according to any one of Claims 1 to 9, **characterized in that** the molar ratio of the monomer or monomers to the radical-generator compound or compounds is from 1 to 100,000.

**11.** Process according to one.of Claims 1 to 10, **characterized in that** the molar ratio of the metal M to the radical-generator(s) is from 0.01 to 100.

**12.** Process according to one of Claims 6 to 11, **characterized in that** the molar ratio L:M is between 0.1 and 10, preferably between 0.5 and 2.

**13.** Process according to any one of Claims 1 to 12, **characterized in that** the polymerization or copolymerization is carried out at a temperature of from 0°C to 130°C.

**14.** Process according to any one of Claims 1 to 13, **characterized in that** the polymerizable or copolymerizable monomers comprise at least one monomer chosen from methacrylates, acrylates, vinylaromatic derivatives, vinyl acetate, vinyl chloride, vinyl fluoride and vinylidene fluoride.

**15.** Process according to Claim 14, **characterized in that** the monomer is chosen from the group, comprising methyl methacrylate, ethyl methacrylate, n-butyl methacrylate, acrylonitrile and styrene.

**16.** Process according to one of Claims 1 to 15, **characterized in that** a block copolymerization is carried Out by introducing, into the polymerization medium in which the first monomer has been polymerized, a second monomer with, where appropriate, a fresh addition of initiator system.

**17.** Process according to one of Claims 1 to 16, **characterized in that** the (co) polymerization is carried out in aqueous medium, in the presence or absence of emulsifiers, in the presence of an organic solvent or a mixture of organic solvents, such as aromatic hydrocarbons, chlorinated hydrocarbons, ethers, cyclic ethers and ketones.

**Patentansprüche**

**1.** Verfahren zur kontrollierten radikalischen Polymerisation oder Copolymerisation von (Meth)acrylmonomeren und/oder Vinylmonomeren und/oder Vinylidenmonomeren und/oder Dienmonomeren, **dadurch gekennzeichnet, daß** mindestens ein genanntes Monomer bei einer Temperatur, die bis auf 0 °C fallen kann, in Substanz, Lösung, Emulsion oder Suspension in Gegenwart eines Initiatorsystems polymerisiert oder copolymerisiert wird, das enthält:

- mindestens eine Verbindung, die Radikale generiert; und
- mindestens einen Katalysator, der aus einem Metallkomplex der folgenden Formel (I) besteht:

$$MA_a(L)_n \quad (I),$$

worin bedeuten:

- M Cu, Ag oder Au;
- A Halogen, Pseudohalogen oder Carboxylat;
- die Gruppen L Liganden des Metalls M, die unabhängig voneinander unter den Liganden der folgenden Formel (II) ausgewählt sind:

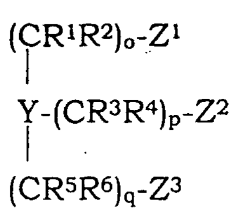

(II),

worin bedeuten:

- Y N oder P;
- $R^1$, $R^2$, $R^3$, $R^4$, $R^5$ und $R^6$ jeweils unabhängig voneinander Wasserstoff, $C_{1-10}$-Alkyl, eine aromatische Gruppe oder eine heteroaromatische Gruppe;
- $Z^1$, $Z^2$ und $Z^3$ jeweils unabhängig voneinander:

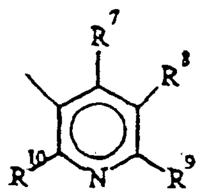 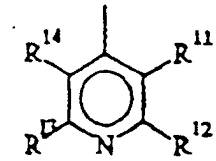 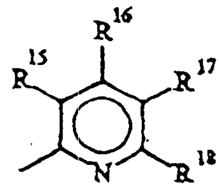 ;

-$NR^{19}R^{20}$

worin:

- die Gruppen $R^7$ bis $R^{18}$ jeweils unabhängig voneinander Wasserstoff, $C_{1-10}$-Alkyl, eine aromatische Gruppe oder eine heteroaromatische Gruppe; und
- $R^{19}$ und $R^{20}$ jeweils unabhängig voneinander Wasserstoff, Halogen, $C_{1-10}$-Alkyl, $C_{1-10}$-Alkoxy oder eine Gruppe $-(CR^{21}R^{22})_rNR^{23}R^{24}$, worin $R^{21}$, $R^{22}$, $R^{23}$ und $R^{24}$ jeweils unabhängig voneinander Wasserstoff, $C_{1-10}$-Alkyl, eine aromatische Gruppe oder eine heteroaromatische Gruppe und r eine ganze Zahl von 1 bis 10 bedeuten;

außerdem können zwei der Gruppen $Z^1$, $Z^2$ und $Z^3$ auch jeweils Wasserstoff bedeuten;

- o, p und q jeweils unabhängig voneinander ganze Zahlen von 1 bis 10, wobei sie auch 0 bedeuten können, wenn der jeweilige gebundene Rest $Z^1$, $Z^2$ oder $Z^3$ -$NR^{19}R^{20}$ bedeutet;

- a 1 oder 2; and
- n 1, 2 oder 3.

**2.** Verfahren nach Anspruch 1, **dadurch gekennzeichnet, daß** M Cu bedeutet.

**3.** Verfahren nach einem der Ansprüche 1 und 2, **dadurch gekennzeichnet, daß** A ein Halogen, das unter Cl, Br, F und I ausgewählt ist, oder ein Pseudohalogen, das unter CN, NCS, $NO_2$ und $N_3$ ausgewählt ist, oder eine Carboxylatgruppe bedeutet, wie beispielsweise Acetat.

**4.** Verfahren nach einem der Ansprüche 1 bis 3, **dadurch gekennzeichnet, daß** die Liganden L unter den Liganden der Formel:

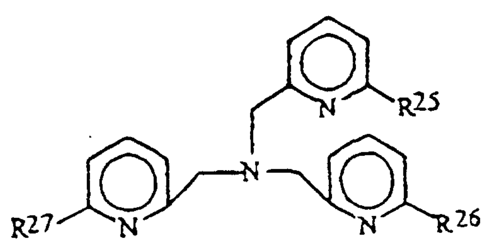

(IIa),

mit: $R^{25} = R^{26} = R^{27} = H$
$R^{25} = H$; und $R^{26} = R^{27} = Me$
$R25 = R26 = R^{27} = Me$;

und den Verbindungen der folgenden Formeln ausgewählt sind:

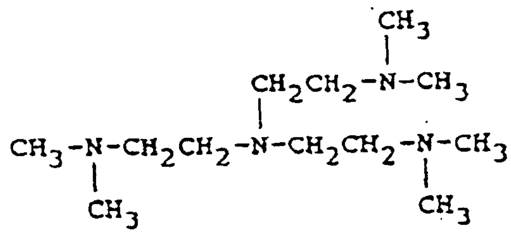

;

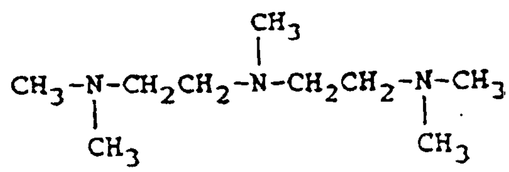

;

und

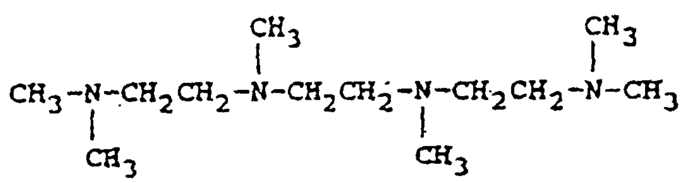

.

**5.** Verfahren nach einem der Ansprüche 1 bis 4, **dadurch gekennzeichnet, daß** der Komplex der Formel (I) in dem Realctionsmedium in situ aus dem Salz des Übergangsmetalls M mit A und dem mehrzähnigen Liganden L gebildet wird.

**6.** Verfahren nach einem der Ansprüche 1 bis 5, **dadurch gekennzeichnet, daß** die Verbindung, die freie Radikale generiert, monofunktionell ist und unter den folgenden Verbindungsklassen ausgewählt ist:

(a) den Derivaten der Formel:

$$CEZ_3$$

worin:

- E = Cl, Br, I, F, H, $-CR^{28}R^{29}OH$, wobei $R^{28}$ und $R^{29}$ jeweils unabhängig voneinander Wasserstoff oder $C_{1-14}$-Alkyl bedeuten; und
- Z = Cl oder Br;

(b) den Derivaten der Formel:

$$R^{30}CCl_3$$

worin $R^{30}$ Phenyl; Benzyl; Benzoyl; Alkoxycarbonyl; $R^{31}CO$, wobei $R^{31}$ $C_{1-14}$-Alkyl oder Aryl bedeutet; Alkyl, Mesityl; Trifluormethyl; oder Nitro bedeutet;

(c) den Derivaten der Formel

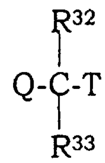 ,

worin bedeuten:

- Q ein Chloratom, ein Bromatom, eine Acetatgruppe, eine Trifluoracetatgruppe oder eine Triflatgruppe;
- $R^{32}$ ein Wasserstoffatom, eine $C_{1-14}$-Alkylgruppe, eine aromatische Gruppe oder die Gruppe $-CH_2OH$;
- T eine Gruppe

  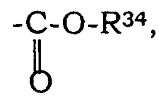

  wobei $R^{34}$ Wasserstoff, Alkyl oder eine aromatische Gruppe bedeutet; eine Gruppe CN; eine Gruppe

  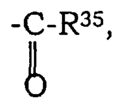

  wobei $R^{35}$ $C_{1-14}$-Alkyl, Phenyl oder Isocyanat bedeutet; eine Hydroxygruppe; eine Nitrogruppe; eine substituierte oder unsubstituierte Aminogruppe; eine $C_{1-14}$-Alkoxygruppe; eine Gruppe $R^{36}CO$, wobei $R^{36}$ eine $C_{1-14}$-Alkylgruppe oder Aryl bedeutet;
- $R^{33}$ die für $R^{32}$ oder Q angegebenen Gruppen oder eine funktionelle Gruppe, wie Hydroxy, Nitro, eine substituierte oder unsubstituierte Aminogruppe, $C_{1-14}$-Alkoxy, Acyl, Carboxy, Ester;

(d) den in α-Stellung halogenierten Lactonen oder Lactamen;

(e) den N-Halosuccinimiden und den N-Halophthalimiden;

(f) den Alkylsulfonylhalogeniden und den Arensulfonylhalogeniden;

(g) den Verbindungen der Formel:

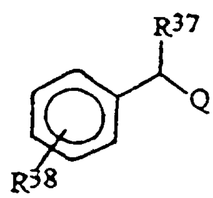

worin:

- $R^{37}$ Wasserstoff, $C_{1-14}$-Alkyl oder eine Carbonsäuregruppe, Estergruppe, Nitrilgruppe oder Ketogruppe bedeutet;
- $R^{38}$ Wasserstoff, $C_{1-14}$-Alkyl, Hydroxy, Acyl, eine substituierte oder unsubstituierte Aminogruppe, Nitro, $C_{1-14}$-Alkoxy oder Sulfonat bedeutet; und
- Q die oben angegebenen Bedeutungen hat;

(h) den Verbindungen der Formel:

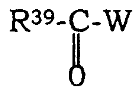

worin:

- $R^{39}$ $C_{1-14}$-Alkyl oder Aryl bedeutet; und
- W Halogen oder Pseudohalogen bedeutet:;

(i). den Verbindungen der Formel:

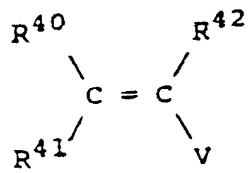

worin:

- $R^{40}$, $R^{41}$ und $R^{42}$ jeweils unabhängig $C_{1-14}$-Alkyl oder Aryl bedeuten; und
- V Halogen, Acetat, Trifluoracetat oder Triflat ist;

(j) den aromatischen Halogeniden der Formel

Ar-U

worin:

- Ar eine aromatische Gruppe bedeutet, beispielsweise $C_6H_5$-, die in ortho-, meta-, oder para-Stellung mit einem Elektronen-Donator oder einem Elektronen-Akzeptor substituiert sein kann; und
- U ein Halogen.

**7.** Verfahren nach einem der Ansprüche 1 bis 5, **dadurch gekennzeichnet, daß** die Verbindung, die Radikale generiert, multifunktionell ist und aus mindestens zwei monofunktionellen, Radikale generierenden Gruppen der Klassen (c) bis (j) gemäß Anspruch 6 besteht, die über eine Kette von Methyleneinheiten oder einen Benzolring oder eine Kombination dieser beiden miteinander verbunden sind, oder unter den Essigsäureanhydriden, wie Chloressigsäureanhydrid und Chlordifluoressigsäureanhydrid, den Tri- oder Tetrahalomethanen und den trichlormethylierten Derivaten der Klassen (a) und (b) gemäß Anspruch 6 ausgewählt ist.

**8.** Verfahren nach einem der Ansprüche 1 bis 5, **dadurch gekennzeichnet, daß** die Verbindung, die Radikale generiert, ein Radikalstarter ist, der ausgewählt ist unter: Azoverbindungen, beispielsweise 2,2'-Azo-bis(2-methyl) propannitril (oder AIBN), 1,1'-Azo-bis(1-cyclohexannitril) und 4,4'-Azo-bis(4-cyanovaleriansäure); den Peroxiden, beispielsweise den Diacylperoxiden, wie Dibenzoylperoxid und Didodecanoylperoxid; den Dialkylperoxiden, wie Di-tert.-butylperoxid und Diisopropylperoxid; Dicumylperoxid; Peroxydicarbonaten; Estern von Persäuren, wie Tert. butylperacetat, Tert.-amylperpivalat, Butyl-per-2-ethylhexanoat, Tert.-butylperpivalat und Tert.-butylperbenzoat; Hydroperoxiden, wie Tert.-butylhydroperoxid; anorganischen Peroxiden, wie wäßrigen Wasserstoffperoxidlösungen; und Natrium- oder Kaliumpersulfat.

**9.** Verfahren nach einem der Ansprüche 1 bis 8, **dadurch gekennzeichnet, daß** die Polymerisation in Gegenwart mindestens eines Aktivators durchgeführt wird, der insbesondere unter den LewisSäuren ausgewählt ist.

**10.** Verfahren nach einem der Ansprüche 1 bis 9, **dadurch gekennzeichnet, daß** das Molverhältnis des Monomers oder der Monomere und der Verbindung(en), die Radikale generieren, im Bereich von 1 bis 100.000 liegt.

**11.** Verfahren nach einem der Ansprüche 1 bis 10, **dadurch gekennzeichnet, daß** das Molverhältnis des Metalls M und der Verbindung(en), die Radikale generieren, im Bereich von 0,01 bis 100 liegt.

**12.** Verfahren nach einem der Ansprüche 6 bis 11, **dadurch gekennzeichnet, daß** das Molverhältnis L:M im Bereich von 0,1 bis 10 und vorzugsweise 0,5 bis 2, liegt.

**13.** Verfahren nach einem der Ansprüche 1 bis 12, **dadurch gekennzeichnet, daß** die Polymerisation oder Copolymerisation bei einer Temperatur von 0 bis 130 °C durchgeführt wird.

**14.** Verfahren nach einem der Ansprüche 1 bis 13, **dadurch gekennzeichnet, daß** die polymerisierbaren oder copolymerisierbaren Monomere mindestens ein Monomer umfassen, das unter den Methacrylaten, Acrylaten, vinylaromatischen Derivaten, Vinylacetat, Vinylchlorid, Vinylfluorid und Vinylidenfluorid ausgewählt ist.

**15.** Verfahren nach Anspruch 14, **dadurch gekennzeichnet, daß** das Monomer unter Methylmethacrylat, Ethylmethacrylat, n-Butylmethacrylat, Acrylnitril und Styrol ausgewählt ist.

**16.** Verfahren nach einem der Ansprüche 1 bis 15, **dadurch gekennzeichnet, daß** eine Sequenzcopolymerisation durchgeführt wird, indem in das Polymerisationsmedium, in dem das erste Monomer polymerisiert wurde, ein zweites Monomer gegeben wird, wobei gegebenenfalls auch ein neues Initiatorsystem eingearbeitet wird.

**17.** Verfahren nach einem der Ansprüche 1 bis 16, **dadurch gekennzeichnet, daß** die (Co)polymerisation in Gegenwart oder Abwesenheit von Emulgatoren in einem wäßrigen Medium in Gegenwart eines organischen Lösungsmittels oder eines Gemisches von organischen Lösungsmitteln durchgeführt wird, wie aromatischen Kohlenwasserstoffen, chlorierten Kohlenwasserstoffen, Ethern, cyclischen Ethern und Ketonen.